# EUROPEAN PATENT SPECIFICATION

(11) **EP 1 417 993 B1**
(45) Date of publication and mention of the grant of the patent: **18.04.2007**
(21) Application number: 04075166.1
(22) Date of filing: 08.05.2001
(51) Int. Cl.: B01D 33/03, B07B 1/46

(54) **A screen arrangement for a vibratory separator, a screen assembly and a vibratory separator**
Siebanordnung für eine Vibrationstrennvorrichtung, Siebkonstruktion und Vibrationstrennvorrichtung
Dispositif tamis pour separateur vibrant, ensemble tamis et separateur vibrant

(30) Priority: 17.06.2000 US 596347
(43) Date of publication of application: 12.05.2004
(62) Divisional of application: 01928076.7
(73) Proprietor: Varco I/P, Inc., Houston TX 77042-4200 (US)
(72) Inventor: Schulte, David Lee Jr., Broussard, LA 70518 (US); Adams, Thomas Cole, Hockley, TX 77447 (US); Seyffert, Kenneth Wayne, Houston, TX 77018 (US); Largent, David Wayne, Cleveland, TX 77327 (US); McClung, Guy Lamont III, Spring, TX 77379 (US); Walker, Jeffrey Earl, Houston, TX 77041 (US); Murray, Hector Murado, c/o Varco Limited, Portlethen (GB)
(74) Representative: Lucas, Brian Ronald

(56) References cited:
- WO-A-01/76719
- US-A- 1 279 630
- US-A- 5 392 925
- US-A- 5 988 397

## Description

The present invention relates to a screen arrangement for a vibratory separator and a vibratory separator.

Screen assemblies are generally used in shale shakers. A typical use for a shale shaker is separating solids from liquids in the drilling of a wellbore for oil and gas. During drilling of a wellbore, a liquid known as mud is circulated in the well. Circulation involves introducing mud into the well and pumping the mud down a pipe such as a drill string. The mud picks up cuttings and other particles from the bottom of the wellbore and are returned to the top of the well via an annulus formed by the drill pipe and the wellbore. Particle and rock laden mud exits the well and is reconditioned ready to be reused. Part of the conditioning process involves filtering the mud in a vibratory shaker, such as a shale shaker. The shale shaker generally comprises a bucket, a pretensioned screen for screening the particle laden mud and a motor for vibrating the bucket and screen. A typical example of a shale shaker is disclosed in PCT Publication No. WO 96/33792, owned by the applicant for the present application. It will be appreciated that the screen needs to be replaced frequently due to heavy wear. It has been found that screens can be pretensioned and mounted on a supporting structure to form a screen assembly. The screen assembly may be placed in and removed from the shale shaker quickly, thereby reducing downtime of the shale shaker. Screen assemblies are arranged therein, typically placed end to end resting at their sides on a ledge welded to the bucket. Such a screen assembly is disclosed in EP-A-0 169 698. The screen assemblies are generally expensive to manufacture, are heavy and are prone to failure in use.

GB-A-2,206,501 discloses a frame for a filtering screen, the frame being of rectangular shape, wherein opposed ends of the frame are formed respectively with a tongue and a groove configuration, so that when in abutting relationship with another frame the tongue of the next frame, forming a seal past which material to be filtered is prevented from passing.

However, it has been found that this arrangement is not suitable for screen assemblies which are used in modern shale shakers. Problems with wear between adjacent screens and buffeting during the vibratory motion of the shale shaker may cause gaps to form between screens.

According to the present invention, there is provided a screen arrangement for a vibratory separator, the screen arrangement comprising a first screen assembly and a second screen assembly, the first screen assembly having a frame to which is mounted screening material, said frame having a groove and said second screen assembly having a frame to which is mounted screening material, said frame having a tongue, characterised in that the end of said tongue and said groove comprise releasably cooperating fastener material, such that, in use, the tongue of the second screen assembly is inserted into the groove of the first screen assembly, whereupon the fastener material on the end of the tongue of the second screen assembly releasably cooperates with the fastener material in the groove of said first screen assembly.

Preferably, the releasably cooperating fastener material is a hook and loop fastener. Advantageously, the hook and loop fastener is VELCRO (RTM).

The present invention also provides a vibratory separator comprising the screen arrangement of the present invention, wherein said vibratory separator comprises a basket and a vibratory mechanism, said screen arrangement fixed in said basket.

For a better understanding of the present invention, reference will now be made, by way of example, to the accompanying drawings, in which:
Figure 1A is a perspective view of two screen assemblies not in accordance with the present invention, in an engaged position;
Figure 1B is an enlarged view of part of the two screen assemblies of Figure 1A, in a disengaged position;
Figure 1C is a cross-section view of an end view of one of the screen assembly of Figure 1A;
Figure 2A is a perspective view of two screen assemblies not in accordance with the present invention, in engaged position;
Figure 2B is an enlarged view of part of the screen assemblies of Figure 2A, in a disengaged position;
Figure 3A is a perspective view of two screen assemblies not in accordance with the present invention, in an engaged position;
Figure 3B is an enlarged view of part of the screen assemblies of Figure 3A, in a disengaged position;
Figure 4A is a perspective view of two screen assemblies not in accordance with the present invention, in an engaged position;
Figure 4B is an enlarged view of part of the screen assemblies of Figure 4A, in a disengaged position;
Figure 5A to 5C and Figure 5E to 5H are perspective views of parts of screen assemblies not in accordance with the present invention;
Figure 5D is a perspective view of parts of screen assemblies in accordance with the present invention;
Figure 6A to 6D are perspective views of parts of screen assemblies not in accordance with the present invention;
Figure 7A is a top view of a screen assembly not in accordance with the present invention;
Figure 7B is a cross-sectional view of an end of the screen assembly of Figure 7A;
Figure 7C is a perspective view of a frame of the screen assembly of Figure 7A;
Figures 8A to 8N are side cross-section views of an end of a screen assembly not in accordance with the present invention;
Figure 9A is a top view of a blank used in the construction of a screen support not in accordance with the present invention;
Figure 9B is a side elevation of a constructed screen support of Figure 9A;
Figure 9C is a perspective view of a partially constructed screen support of Figure 9A, with details not shown;
Figure 10A is a perspective view of a screen combination not in accordance with the present invention;
Figure 10B is an exploded view of the screen combination of Figure 10A;
Figures 10C is a bottom view of a screen for use in a screen combination as in Figure 10A;
Figure 10D is a top view of a screen for use in a screen combination as in Figure 10A;
Figure 11A is a perspective view of a screen combination not in accordance with the present invention;
Figure 11B is an exploded view of the screen combination of Figure 11A;
Figure 11C is a bottom view of a screen for use in a screen combination as in Figure 11A; and
Figure 11D is a top view and Figure 11E is a bottom view of screens for use in a screen combination as in Figure 11A.

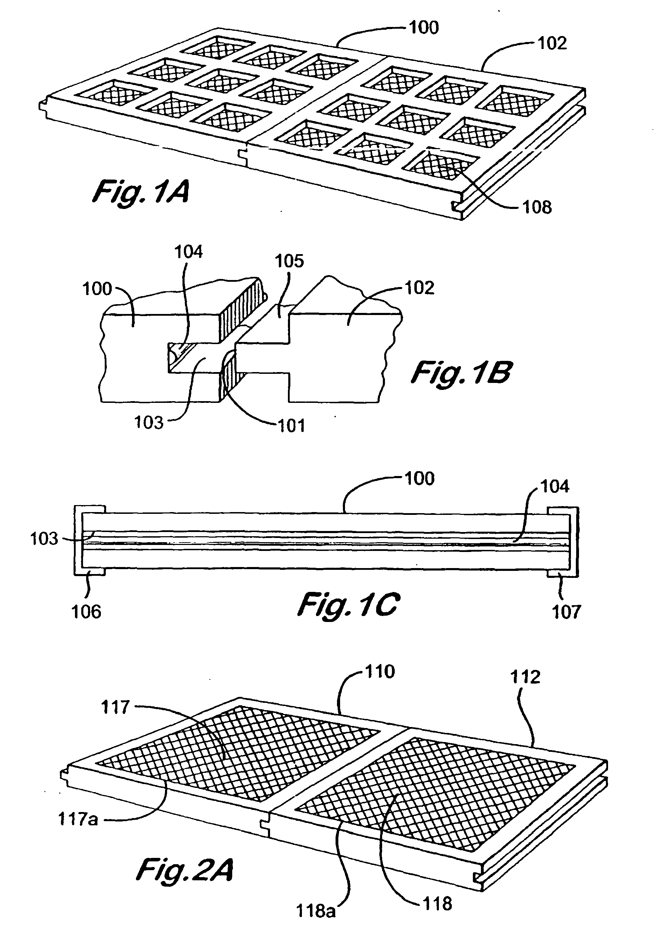

Figures 1A to 1C show two substantially identical screen assemblies not in accordance with the present invention, generally identified by the reference numerals 100 and 102. Screen assembly 100 has an end with a groove 103 that extends from one side of the screen 100 to the other. A seal member 104 also extends within the groove from one side of the screen 100 to the other side. The seal member 104 may be formed integrally of the screen 100 or it maybe a separate member adhered and/or secured to the screen 100 with any suitable known adhesive, glue, and/or fastener.

The groove 103 is sized and configured to receive a tongue 105 of the screen assembly 102. An end surface 101 of the tongue 105 sealingly abuts the seal member 104 of the screen assembly 100.

The screen assemblies 100 and 102 have screening areas 108 that include screening material and are defined by cross openings in a frame.

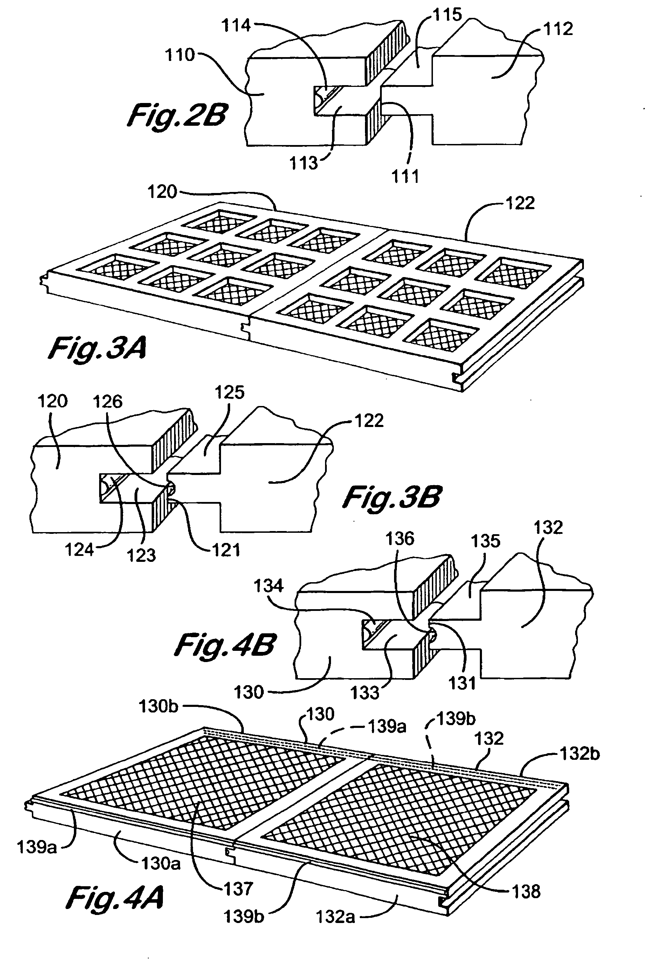

Screens 110 and 112 as shown in Figures 2A and 2B are similar to the screen assemblies of Figure 1A; but screening material 117, 118 covers openings 117a, 118a, respectively, through the screens 110, 112, respectively. Optionally, any known screen support, strips, straps, or plate may be used with the screens 110, 112 beneath the screening material.

A seal member 114 is like the seal member 104 of Figure 1B; a tongue 115 and end surface 111 are like the tongue 105 and end surface 101 of Figure 1B, respectively; and a groove 113 is like the groove 103 of Figure 1B.

Figures 3A and 3B show two substantially identical screen assemblies not in accordance with the present invention, generally identified by the reference numerals 120 and 122 which are similar to the screen assemblies of Figures 1A and 2A; but a tongue 125 of the screen assembly 122 has an end surface 121 with a groove therein that is sized, positioned, and shaped to receive therein at least a portion of a seal member 124 in a groove 123 of the screen assembly 120. The groove 126 extends across the tongue 125, from one side of the screen 122 to the other. Correspondingly, the seal member 124 extends across the screen assembly 120.

Figures 4A and 4B show two substantially identical screen assemblies not in accordance with the present invention, generally identified by the reference numerals 130 and 132 which are like the screens 110, 112 of Figure 2A; but the screen assembly 132 has a tongue 135 (like the tongue 115, Figure 2B) with an end surface 131 (like the end surface 11, Figure 2B) with a groove 136 that extends across the screen assembly 132 from one side to the other and sealingly receives therein at least a portion of a seal member 134 in a groove 133 (like the groove 113, Figure 2B) of the screen 130. Screening material 138 is like the screening material 118, Figure 2A, over openings, not shown, like the openings 117a, 118a of Figure 2A. The screen 130, optionally, has a seal member 139a along each of its sides 130a, 130b; and the screen 132 has a seal member 139b along each of its sides 132a, 132b. The seal members 139a, 139b may be any seal member disclosed herein adhered or secured in any manner disclosed herein. Any screen or screen assembly disclosed herein may have side seal members like the seal members 139a, 139b in addition to, or instead of, any of the end seal members disclosed herein.

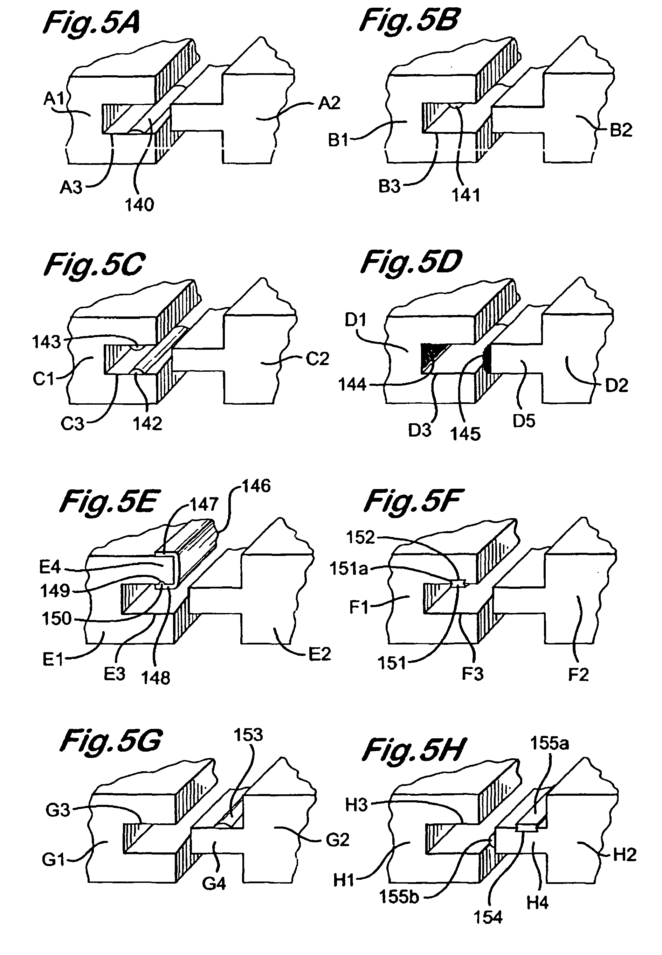

Figures 5A to 5C and 5E to 5H illustrate partially various screens not in accordance with the present invention with a variety of seal members. For each of these screens, although they are shown partially, it is to be understood that they are like the complete screens or screen assemblies disclosed herein and/or referred to herein and that the structures of Figures 5A to 5H may be used for any screen or screen assembly referred to or disclosed herein.

Figure 5A shows two screen assemblies A1 with a groove A3 (like the groove 103, Figure 1B) and a seal member 140 (like the seal member 104, Figure 1B. The screen assembly A2 is like the screen assembly 102, Figures 1A, 1B. However, the seal 140 is arranged on a bottom surface of the groove A3.

Figure 5B shows two screen assemblies B1 with a groove B3 (like the groove 103, Figure 1B) and a seal member 141 (like the seal member 104, Figure 1B. The screen assembly B2 is like the screen assembly 102, Figures 1A, 1B. However, the seal 141 is arranged on a top surface of the groove B3.

Figure 5C shows a screen assembly C1 with a groove C3 (like the groove 103, Figure 1B) and seal members 142 and 143 (like the seal member 104, Figure 1B). The screen C2 is like the screen 102, Figures 1A, 1B. However, the seals 142 and 143 are arranged respectively on a bottom and top surface of the groove C3.

Figure 5D shows a screen arrangement in accordance with the present invention. A screen D1 has a groove D3 (like the groove 103, Figure 1B) and an amount 144 of a releasably cooperating fastener material (for example hook-loop material or VELCRO - TM material). The screen D2 is like the screen 102, Figures 1A, 1B. The screen D2 has an amount 145 of a releasably cooperating fastener material (for example hook-loop material or VELCRO - TM material) on an end of a tongue D5. Additionally, seals may be provided on the top and/or bottom surfaces of the groove, as shown in Figures 5A, 5B and 5C.

Figure 5E shows a screen E1 with a groove E3 (like the groove 103, Figure 1B) and a seal member 146. The seal member 146 is held on a portion E4 of the screen E1 by a friction fit and/or by a suitable adhesive. The seal member 146 has an upper arm 147 and a lower arm 148 with a projecting rib 50 that releasably resides in a corresponding notch 149 of the portion E4. The projecting rib 50 extends along the entire length of the portion E4, but a single projecting bead or series of beads on the seal member 146 and corresponding recesses on the portion E4 may be used. The screen E2 is like the screen 102, Figures 1A, 1B.

Figure 5F shows a screen assembly F1 with a groove F3 (like the groove 103, Figure 1B) and a seal member 151. The seal member 151 has a portion 151a that releasably resides in a corresponding recess 152 of the screen assembly F1. Alternatively or in addition to having the seal member releasably connected to the screen assembly F3, adhesive may be used to attach the seal member 151 to the screen F3 (as may the seal member 146 be attached to the screen assembly E3, Figure 5E and any seal member in any screen disclosed herein). The screen assembly F2 is like the screen assembly 102, Figures 1A, 1B.

Figure 5G shows a screen assembly G1 with a groove G3 (like the groove 103, Figure 1B). A seal member 153 is on a tongue G4 of a screen assembly G2 (like the screen assembly 102, Figures 1A, 1B).

Figure 5H shows a screen assembly H1 with a groove H3 (like the groove 103, Figure 1B). A screen assembly H2 (like the screen 102, Figures 1A, 1B) has a tongue H4 with a seal member 155b.

Any seal member for any screen assembly disclosed herein may be connected to, attached to or formed integrally of its corresponding screen. Any seal member shown in Figures 5A to 6D is to be understood as, preferably, extending along the entire length of the side or tongue at which it is located; although shorter seal members may be used only on part of said sides or members.

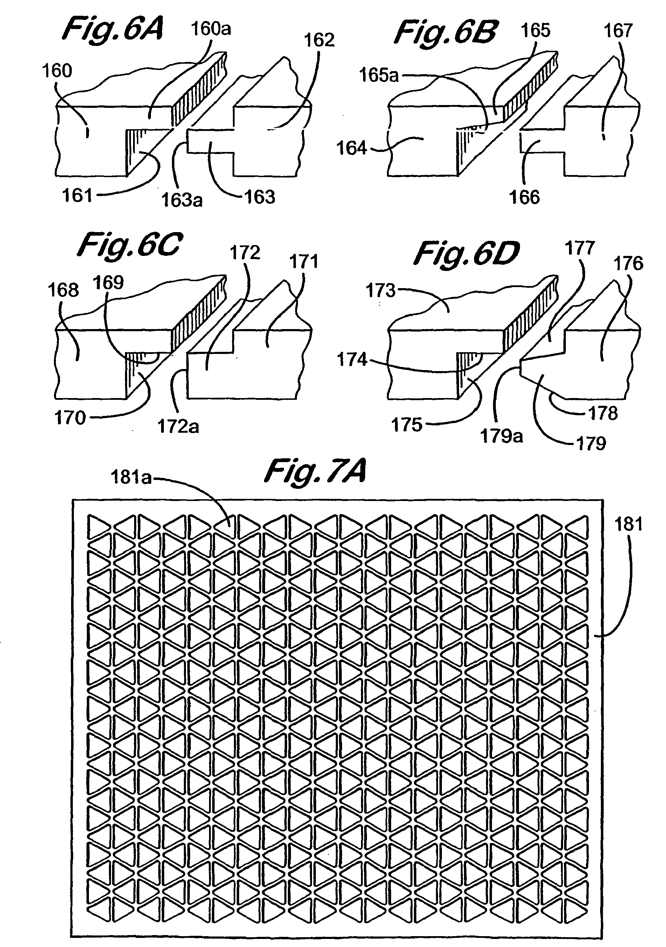

Figures 6A to 6D show parts of various screen assemblies. For each of these screen assemblies, although they are shown partially, it is to be understood that they are like the complete screens or screen assemblies disclosed herein and/or referred to herein and that the structures of Figures 5A - 5H may be used for any screen or screen assembly referred to or disclosed herein.

As shown in Figure 6A, a screen assembly 160 has a shoulder 160a and a lower surface 161 which is sealingly abutted by an end portion 163a of a tongue 163 of a screen assembly 162 when the two screen assemblies are abutted end-to-end, for example, in a shaker basket and/or a top of the end portion 163a sealingly abuts the shoulder 160a.

Figure 6B shows screen assemblies 164 and 167 not in accordance with the present which are similar to the screen assemblies of Figure 6A; but a shoulder 165 of the screen assembly 164 has a tapered or inclined lower surface 165a that extends across the screen assembly 164 to facilitate sealing emplacement of the screen assembly 167, for example in a shaker basket, in abutting relationship to the screen assembly 164 and/or a top surface of a tongue 166 of the screen 167 sealingly abuts the shoulder 165.

Figure 6C shows screen assemblies 168 and 171 not in accordance with the present invention. The screen assembly 168 has an end shoulder 169 with an end surface 170 and the screen assembly 171 has a ledge 172 with a ledge end surface 172a that sealingly abuts the surface 170 when the screen assemblies 168 and 171 are abutted against each other end-to-end and/or a top of the ledge 172 sealingly abuts the end shoulder 169.

Figure 6D partially shows screen assemblies 173 and 176 not in accordance with the present invention. The screen assembly 173 has a shoulder 174 and an end surface 175. The screen assembly 176 has a tongue 179 with an inclined top surface 177 extending thereacross and an inclined lower surface 178 extending thereacross. A front surface 179a of the tongue 179 is configured and positioned to sealingly contact the end surface 175 of the screen assembly 173 when the two screens abut each other end-to-end and/or the surface 177 sealingly abuts the shoulder 174. Any seal member disclosed herein may be used with any screen in Figures 6A to 6D, as may be any connection material disclosed herein.

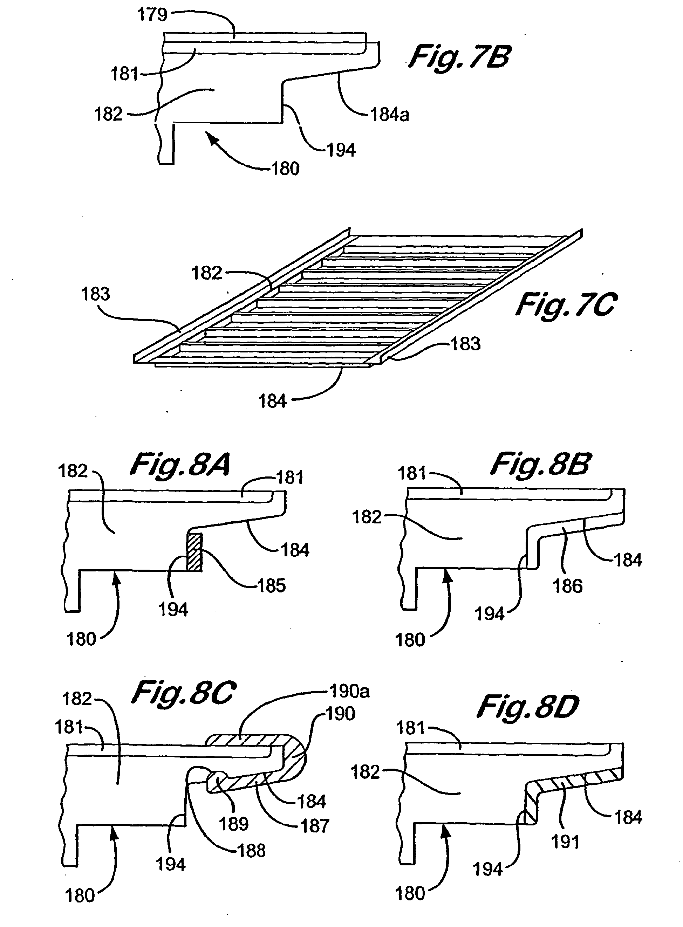

Figures 7A to 7C illustrate a screen assembly 180 not in accordance with the present invention, which has a perforated plate 181 having a plurality of triangular openings 181a therethrough. The openings 181a may be any suitable shape, such as square or rectangular. Optionally any perforated plate disclosed herein or in a patent or application referred to herein may be used instead of the plate 181 with any pattern of openings as viewed from above (as in Figure 7A) and with any suitable glue pattern thereon. As shown in Figure 7B, screening material 179 represent any screening material or combination thereof disclosed or referred to herein or in any patent or application referred to herein. The plate 181 is positioned between lips 183 of a frame 182. An end 184 has an inclined lower surface 184a that facilitates emplacement of another screen assembly in end-to-end abutting relationship with the screen assembly 180. An end of such another screen assembly may sealingly abut an end surface 194 of the frame 182.

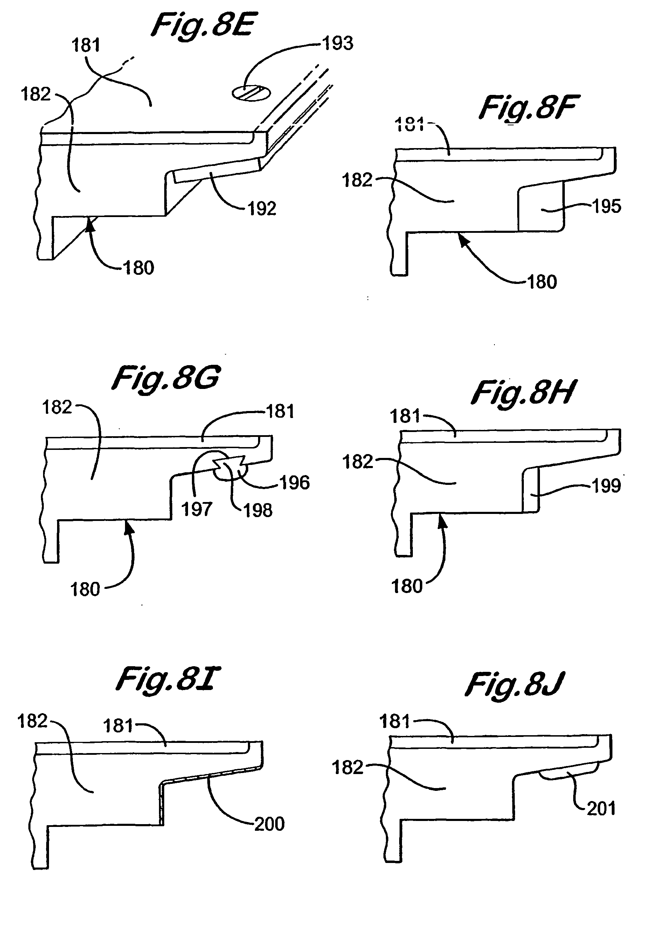

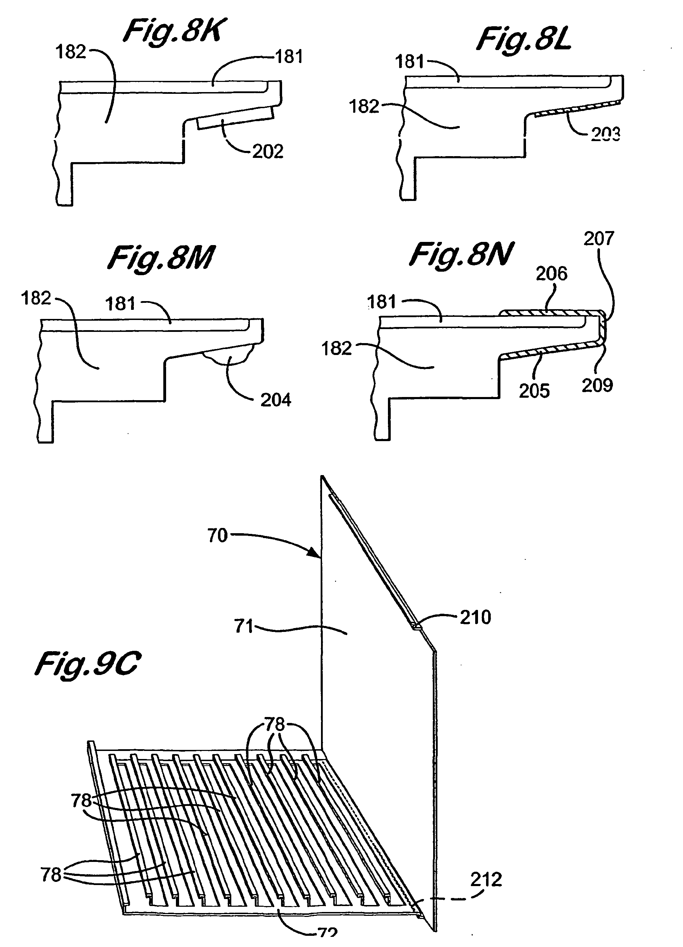

Figures 8A to 8N illustrate various possible end structures for a screen such as the screen 180 of Figure 7A. Also, such end structures may be used with any screen or screen assembly disclosed or referred to herein or in any patent or application referred to herein. Figure 8A shows a foam seal member 185 attached to the end surface 194 of the frame 182. Figure 8B shows a seal member 186 which is urethane moulded onto the screen 180.

Figure 8C shows a seal member 190 that releasably clips onto the end 184 of the screen 180. The seal member 190 has a top part 190a, a bottom part 187, and a top bead 189 that releasably is held in corresponding recess 188 of the screen frame 182. The seal member 190 may be made of any suitable material, including, but not limited to, plastic, foam, and rubber.

Figure 8D shows a seal member 191 which is rubber painted onto the end of the frame 182. Figure 8E shows a seal member 192, for example made of rubber, foam, or plastic, which is secured to the frame 182 with one or more screws 193 or other suitable fasteners. Any seal member disclosed herein may, optionally (or in addition to adhesives or fasteners) be connected with releasable fastening material such as well-known hook-and loop fastener materials.

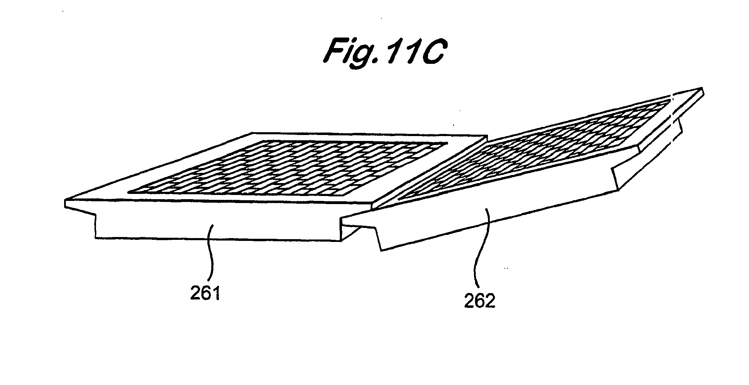

Figure 8F shows a seal member 195, which is a mass or bead of caulking applied on the end of the frame 182. Figure 8G illustrates a seal member 196 with a portion 198 sized and configured for receipt within a corresponding notch 197 in the frame 182. Figure 14H shows a seal member 199 which is urethane moulded onto the end of the frame 182. Figure 8I shows a seal member 200 which is rubber sprayed onto the end of the frame 182.

Figure 8J shows a seal member 201, which is urethane molded onto the end of the frame 182. Figure 8K shows a seal member 202 which is foam secured on the end of the frame 182. Figure 8L shows a seal member 203 which is rubber painted onto the end of the frame 182. Figure 8M shows a seal member 204 which is a mass or bead of caulking applied on the end of the frame 182. Figure 8N shows a seal member 209 which is a rubber coating applied by dipping the end 182 into a liquid mass of rubber. The seal member 209 has a top portion 206, a mid portion 207 and a bottom portion 205.

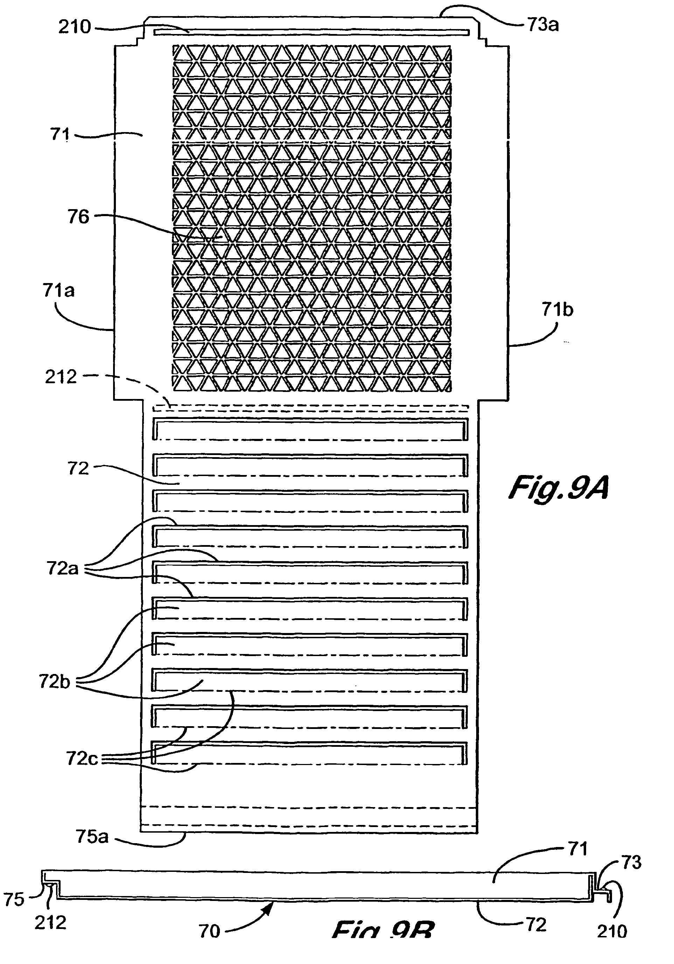

Figures 9A, 9B and 9C show a UNIBODY structure 70 (as described in co-pending PCT Application No. PCT/GB01/01610, which is owned by the applicants for the present case and which is incorporated herein for all purposes). The support structure 70 is made from a single sheet of metal in a one piece structure. The support structure 70 comprises a body member with a portion 71 having at least one opening therethrough, and preferably a plurality of openings 76 (similar to that shown in Figure 7A). The portion 71 has integral side portions 71a, 71b foldable to form a pair of spaced-apart integral side members. The support structure is provided with integral end portions 73a, 75a folded to form a pair of spaced-apart integral end members 73, 75 configured with a ledge portion and a shoulder support portion respectively. The end members 73, 75 are provided with a seal member 210 and a seal member 212 for sealing contact of the unibody support structure with another item. Either one of the seal members may be deleted. The seal members 210, 212 may be applied to the unibody support structure at any time in the process of making a screen assembly with the unibody structure. Any seal member disclosed herein may be used as the seal member 210 or the seal member 212. Alternatively, a portion of the unibody structure itself may be sent or formed to form the seal members.

The side portions 71a, 71b of the body member 71 may be provided with sub-portions foldable to form a hook strip (not shown) on each of two opposed sides of the support structure.

The support structure 70 has a further portion 72 having a plurality of spaced-apart openings, slots or cuts 72a. The openings, slots or cuts 72a define a plurality of tongue portions 72b foldable along lines 72c from the further portion 72 to form a plurality of spaced-apart support strips or ribs 78. Preferably, the tongue portions 72b are folded out of the page, as shown in Figure 9A. The tongue portions 72b preferably have ends which are folded into a flat top or C-shape, as shown in Figure 9C. The plurality of spaced-apart support strips or ribs 78 connected to and beneath the portion 71 of the integral body member with the plurality of spaced-apart screening openings. The plurality of spaced-apart support strips or ribs 78 are substantially parallel to each other.

The further portion 72 is foldable over at least a part of the portion 71. The support structure 70 may be integral with a filtering means. At least one sheet of screening material may be arranged on the portion 71 over the openings 76.

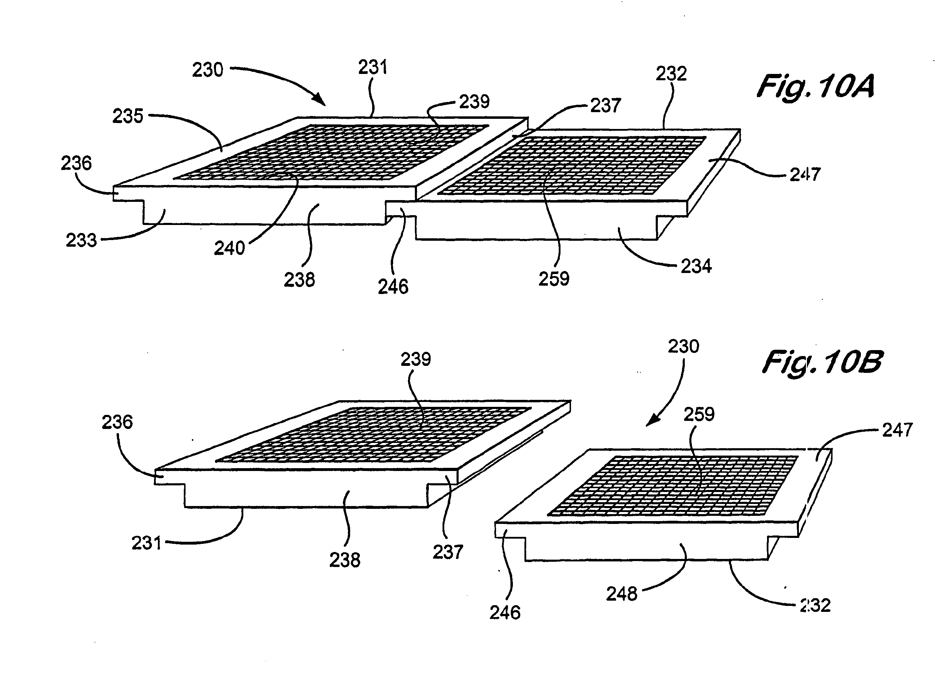

Figures 10A and 10B illustrate a screen combination 230 not in accordance with the present invention which includes a first screen 231 and a second screen 232. The screens 231, 232 each have substantially identical frames 233, 234 which. The frame 233 has a top 235 and shoulders 236, 237 that project from a base 238. Screening material 239 (any disclosed herein) is over an opening 240 through the frame 233. Alternatively the frame itself may have a pattern or series of openings therethrough (any desired or referred to herein) over which screening material is placed. Any two similar screens according to the present invention may be used instead of the screens 231, 232.

As shown in Figure 10A a shoulder 246 of the screen 232 (like the shoulder 236) is positioned beneath the shoulder 237 of the screen 231. The screen 232 has screening material 259 thereon. Preferably the shoulder 246 sealingly contacts the shoulder 237 along its length. The screen 232 also has a shoulder 247 and a base 248. The positioning illustrated in Figure 10A is the positioning the screens have in the basket of certain vibratory separators. Any shape disclosed herein may be used for the shoulders and any seal or seal member or members disclosed herein may be used thereon.

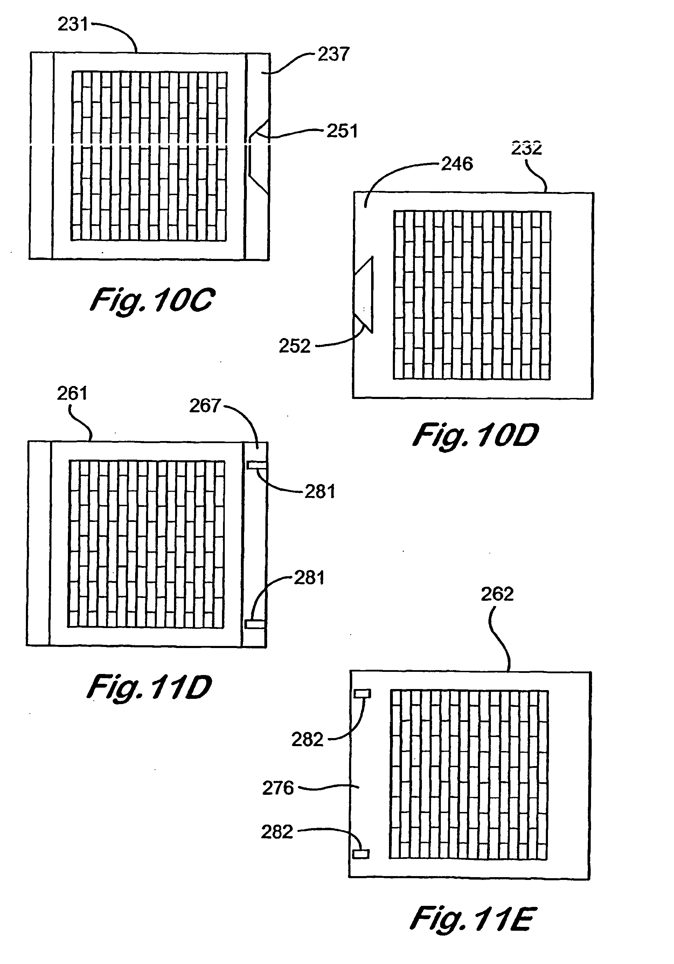

Figures 10C and 10D illustrate optional embodiments for the screens 231, 232. As shown in Figure 10C the shoulder 237 of the screen 231 has a recess 251 formed in the shoulder. A positioning member 252 projects upwardly from the top of the shoulder 246 of the screen 232. The positioning member 252 is sized, shaped, positioned and configured for receipt within the recess 251 to facilitate correcting positioning of the screen 232 with respect to the screen 231. A screen according to the present invention may have both a recess as the recess 251 and a positioning member as the member 252.

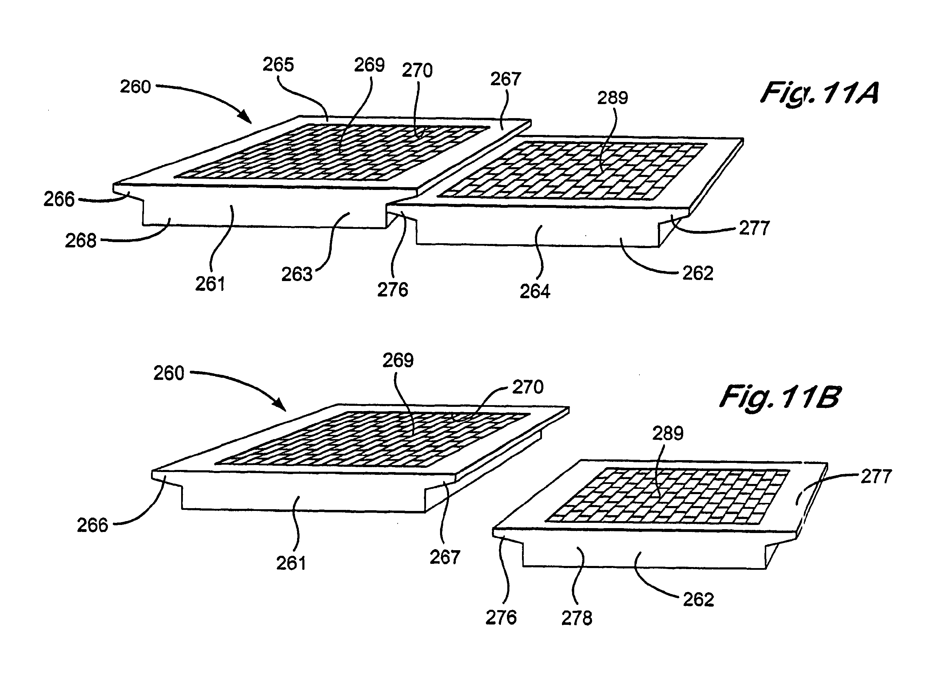

Figures 11A and 11B illustrate a screen combination 260 not in accordance with the present invention which includes a first screen 261 and a second screen 262. The screens 261, 262 each have, respectively, a frame 263, 264 which are substantially identical. The frame 263 has a top 265 and shoulders 266, 267 that project from a base 268. Screening material 269 (any disclosed herein) is over an opening 270 through the frame 263. Alternatively the frame itself may have a pattern or series of openings therethrough (any desired or referred to herein) over which screening material is placed. Any two similar screens may be used instead of the screens 231, 232.

As shown in Figure 11A a shoulder 276 of the screen 262 (like the shoulder 266) is positioned beneath the shoulder 267 of the screen 261. The screen 262 has screening material 289 thereon. Preferably the shoulder 276 sealingly contacts the shoulder 267 along its length. The screen 262 also has a shoulder 277 and a base 278. The positioning illustrated in Figure 11A is the positioning the screens have in the basket of certain vibratory separators. Any shape disclosed herein may be used for the shoulders and any seal or seal member or members disclosed herein may be used thereon.

Figure 11C shows the screen 262 being placed into position with respect to the screen 261.

Figures 11D and 11E illustrate optional embodiments for the screens 261, 262. As shown in Figure 11D the shoulder 267 of the screen 261 has recesses 281 formed in the shoulder. Positioning members 282 project upwardly from the top of the shoulder 276 of the screen 262. The positioning members 282 are sized, shaped, positioned and configured for receipt within the recesses 281 to facilitate correcting positioning of the screen 262 with respect to the screen 261. A screen may have both recesses as the recesses 281 and positioning members as the members 282.

## Claims

1. A screen arrangement for a vibratory separator, the screen arrangement comprising a first screen assembly (D1) and a second screen assembly (D2), the first screen assembly (D1) having a frame to which is mounted screening material, said frame having a groove (D3) and said second screen assembly (D2) having a frame to which is mounted screening material, said frame having a tongue (D5), **characterised in that** the end of said tongue (D5) and said groove (D3) comprise releasably cooperating fastener material (144,145), such that, in use, the tongue (D5) of the second screen assembly (D2) is inserted into the groove (D3) of the first screen assembly (D1), whereupon the cooperating fastener material (145) on the end of the tongue (D5) of the second screen assembly (D2) cooperates with the cooperating fastener material (144) in the groove (D3) of said first screen assembly (D1).

2. A screen arrangement as claimed in Claim 1, wherein said fastener material is a hook and loop fastener.

3. A screen arrangement as claimed in Claim 2, wherein said hook and loop fastener is VELCRO (RTM).

4. A vibratory separator comprising the screen arrangement as claimed in any of Claims 1 to 3, wherein said vibratory separator comprises a basket and a vibratory mechanism, said screen arrangement fixed in said basket.

## Patentansprüche

1. Siebanordnung für einen Vibrationsseparator, wobei die Siebanordnung eine erste Siebbaueinheit (D1) und eine zweite Siebbaueinheit (D2) umfasst, wobei die erste Siebbaueinheit (D1) einen Rahmen besitzt, an dem Siebungsmaterial montiert ist und der eine Nut (D3) besitzt, und wobei die zweite Siebbaueinheit (D1) einen Rahmen besitzt, an dem Siebungsmaterial montiert ist und der eine Zunge (D5) besitzt, **dadurch gekennzeichnet, dass** das Ende der Zunge (D5) und die Nut (D3) lösbar zusammenwirkendes Befestigungseinrichtungsmaterial (144, 145) umfassen, derart, dass im Gebrauch die Zunge (D5) der zweiten Siebbaueinheit (D2) in die Nut (D3) der ersten Siebbaueinheit (D1) eingesetzt wird, woraufhin das zusammenwirkende Befestigungseinrichtungsmaterial (145) am Ende der Zunge (D5) der zweiten Siebbaueinheit (D2) mit dem zusammenwirkenden Befestigungseinrichtungsmaterial (144) in der Nut (D3) der ersten Siebbaueinheit (D1) zusammenwirkt.

2. Siebanordnung nach Anspruch 1, bei der das Befestigungseinrichtungsmaterial eine Haken- und Schlaufen-Befestigungseinrichtung ist.

3. Siebanordnung nach Anspruch 2, bei der die Haken- und Schlaufen-Befestigungseinrichtung VELCRO^{™} ist.

4. Vibrationsseparator, der die Siebanordnung nach einem der Ansprüche 1 bis 3 umfasst, wobei der Vibrationsseparator einen Korb und einen Vibrationsmechanismus umfasst, wobei die Siebanordnung in dem Korb befestigt ist.

## Revendications

1. Dispositif tamis pour séparateur vibrant, le dispositif tamis comprenant un premier ensemble tamis (D1) et un second ensemble tamis (D2), le premier ensemble tamis (D1) comportant une structure sur laquelle est fixé un matériau de tamisage, ladite structure présentant une rainure (D3) et ledit second ensemble tamis (D2) ayant une structure sur laquelle est fixé un matériau de tamisage, ladite structure comportant une cannelure (D5), **caractérisé en ce que** l'extrémité de ladite cannelure (D5) et de ladite rainure (D3) comportent un matériel de fixation par coopération de façon libérable (144, 145) de telle sorte que, en fonctionnement, la cannelure (D5) du second ensemble tamis (D2) est insérée dans la rainure (D3) du premier ensemble tamis (D1), de sorte que le matériel de fixation par coopération (145) situé sur l'extrémité de la cannelure (D5) du second ensemble tamis (D2) coopère avec le matériel de fixation par coopération (144) placé dans la rainure (D3) dudit premier ensemble tamis (D1).

2. Dispositif tamis selon la revendication 1 dans lequel ledit matériel de fixation est un élément de fixation à boucle et à crochet.

3. Dispositif tamis selon la revendication 2 dans lequel ledit élément de fixation à boucle et à crochet est une fermeture VELCRO (RTM).

4. Séparateur vibrant comportant le dispositif tamis selon l'une quelconque des revendications 1 à 3, dans lequel ledit séparateur vibrant comporte un panier et un mécanisme vibrant, ledit dispositif tamis étant fixé dans ledit panier.
